# EUROPÄISCHE PATENTSCHRIFT

(11) **EP 2 676 409 B1**
(45) Veröffentlichungstag und Bekanntmachung des Hinweises auf die Patenterteilung: **08.04.2015**
(21) Anmeldenummer: 11718251.9
(22) Anmeldetag: 19.02.2011
(51) Int. Cl.: H04L 12/24, H04L 12/26, H04L 12/723, H04L 12/721

(54) **SCHLEIFEN VON MPLS PFADEN AUF WEITERLEITUNGSEBENE FÜR VERBINDUNGSLOSE MPLS NETZE**
CUTTING MPLS PATHS AT FORWARDING LEVEL FOR CONNECTIONLESS MPLS NETWORKS
BOUCLES DE TRAJETS MPLS AU NIVEAU RÉACHEMINEMENT POUR RÉSEAUX MPLS SANS CONNEXION

(43) Veröffentlichungstag der Anmeldung: 25.12.2013
(73) Patentinhaber: Deutsche Telekom AG, 53113 Bonn (DE)
(72) Erfinder: GEIB, Rüdiger, 64297 Darmstadt (DE); GROFFMANN, Maic, 65197 Wiesbaden (DE); HORNEFFER, Martin, 48165 Münster (DE)
(74) Vertreter: Bill, Burkart Hartmut
(86) Internationale Anmeldenummer: PCT/DE2011/000162
(87) Internationale Veröffentlichungsnummer: WO 2012/110011

(56) Entgegenhaltungen:
- US-A1- 2006 198 321
- US-B1- 7 940 695

## Beschreibung

Die vorliegende Erfindung bezieht sich auf das Schleifen von MPLS Pfaden auf Weiterleitungsebene für verbindungslos geroutete MPLS Daten-Netzwerke. Die vorliegende Erfindung bezieht sich insbesondere auf das Vermittlungsverfahren in Daten-Netzwerken mittels Multiprotocol Label Switching (MPLS), das die Übertragung von Datenpaketen in einem verbindungslosen Netzwerk auf einem zuvor mittels sogenannten MPLS Kontroll-Paketen aufgebauten Pfad ermöglicht. Dieses Vermittlungsverfahren wird überwiegend in großen Transportnetzen eingesetzt, wie z.B. dem Internet, in dem Sprach- und Datendienste auf Basis von Internet Protokollen (IP) übertragen werden können.

Bei der Datenübertragung in einem verbindungslosen Netzwerk können Daten in Form von Datenpaketen von einem Endgerät an ein Ziel bzw. einen Empfänger gesendet werden, wobei die auf dem Übermittlungsweg liegenden Netz- oder Vermittlungsknoten (in der Regel "Core Router" bzw. Kantenrouter) zusammen mit dem Datenpaket Informationen erhalten, wie die Daten weiterzuleiten sind. Muss dagegen vor dem Senden von Daten durch ein Endgerät erst ein Pfad durch das Netz zum Empfänger eingerichtet bzw. signalisiert werden, handelt es sich um eine sogenannte verbindungsorientierte Datenübertragung. In diesem Fall werden die Netzknoten (in der Regel "Switches") vorab durch Mess-Pakete mit den notwendigen Verbindungsinformationen versehen, um dann die gesendeten Daten korrekt weiterzuleiten.

Mit einer Kante ("Edge") wird in Netzwerken der Übergang zwischen zwei Netzen oder Subnetzen bezeichnet, wie z.B. der Übergang zwischen einem Kernnetz und einem Anschlussnetz. Während im Kernnetz sogenannte innere Router ("IR Router") bzw. Kern-Router ("Core Router") als Vermittlungsknoten zur Anwendung kommen, werden an Netzübergängen sogenannte Kantenrouter bzw. "Edge-Router" eingesetzt, welche die Vermittlungsfunktion zwischen dem Kernnetz und dem Anschlussbereich übernehmen und damit den Breitbandzugang eines Netzwerkanschlusses auf der sogenannten letzten Meile ("Last Mile") darstellen. In einem autonomen System eines Netzwerkverbundes wird beispielsweise mindestens ein Kantenrouter bzw. "Edge-Router" als sogenanntes "Exterior-Gateway" eingerichtet, der das autonome System mit einem anderen autonomen Systemen verbindet. Solche Kantenrouter sind mit den Vermittlungsknoten ("Core Routern") im Kernnetz verbunden und vermitteln die Datenpakete zwischen dem Kernnetz und dem Anschlussnetz.

Beim MPLS Routing werden zur Übermittlung von Datenpaketen sogenannte Tunnel bzw. MPLS Pfade im Netzwerk realisiert. Dazu wird das Ziel eines Pakets anhand dessen empfangener Ziel-Adressinformation festgelegt, um das Paket auf dem entsprechenden MPLS Pfad zu senden. Das kann eine IP-Adresse, MPLS-, Ethernet- oder eine andere Ziel-Information sein. Ein MPLS (Netz-) Kantenrouter bzw. Vermittlungsknoten legt anhand dieser Adressinformation einen Adress-Stapel bzw. Label-Stapel für das betreffende Datenpaket fest, den er dem Datenpaket hinzufügt. Damit wird der MPLS Pfad festgelegt, den das Paket über den oder die Kantenrouter auf dem Weg zum Ziel nimmt.

Auf dem Weg zum Ziel wird an jedem Router der geltenden Transportebene das obere Label des Adress-Stapels bzw. Label-Stapels ausgewechselt. Am Ziel-Kantenrouter oder am davor liegenden Router bzw. Vermittlungsknoten wird dann das obere Label bzw. die obere Adresse des Label-Stapels bzw. Adress-Stapels entfernt. Der Ziel-Kantenrouter leitet das Datenpaket als IP-Paket weiter oder er wertet ein "Virtuelle Verbindung Label" aus und legt dann den nächsten Schritt fest. Dabei entfernt der Ziel-Kantenrouter das "Virtuelle Verbindung Label" und sendet das Paket zu einer lokalen Schnittstelle, die durch das "Virtuelle Verbindung Label" identifiziert wird. Alternativ ersetzt der Ziel-Kantenrouter das "Virtuelle Verbindung Label" und ergänzt ein weiteres Transport Label am Datenpaket.

Um ein IP Mess-Paket zu einem Sender zurück zu senden bzw. zu schleifen, muss eine IP-echo request/reply Funktion verwendet werden, auch bekannt als "ping" (Standards: RFC 792 für IPv4 und RFC 2463 für IPv6). Eine vergleichbare Funktion wurde auch für MPLS standardisiert, beispielsweise eine MPLS- oder IP-echo request/reply Funktion (MPLS ping, Standard RFC 4379). Zwischen zwei Messpunkten können mit eigenen Messgeräten an jedem Kantenrouter Messungen durchgeführt werden, Messschleifen als Leitungsstücke zwischen physikalischen Ports eines Kantenrouters oder als "Continuity Check" wie in IEEE 802.1 ag oder Y. 1731 sind eine weitere Lösungsmöglichkeit. Bekannte Lösungen beispielsweise nach dem Standard RFC 5085 schleifen Datenpakete auf der Ebene einer virtuellen Verbindung zurück. Die bekannten Standards erfordern jedoch ausnahmslos spezielle Konfigurationen oder Software an beiden Enden einer Messverbindung und damit spezielle Konfigurationen oder Software an mindestens zwei Kantenroutern. Bei einigen der bisher bekannten Lösungen wird die Weiterleitungsebene verlassen und das Mess-Paket wird von der Software des Kantenrouters verarbeitet, was jedoch die Messung verfälschen kann. Andere Lösungen setzen eine verbindungsorientierte Pfadführung voraus, bei der an jedem MPLS Router ein MPLS Pfad in beide Richtungen vorhanden sein muss.

So beschreibt die US 2006/198321 A1 ein Verfahren, um Ursprungsknoten oder Router auf einem Übertragungspfad innerhalb von MPLS-Netwerken zu identifizieren, indem die Identität des Ursprungsknotens sowie nachfolgender Transportknoten erst entlang eines durch ein Ping-Paket passierten Übertragungspfades ermittelt werden. Die Identität der ASBR Knoten wird dann in einem Stapel oder einem anderen Objekt gespeichert, so dass der angepingte Ziel-Knoten einen Rückführpfad verwenden kann. Nach Erreichen des Ziel-Knotens, verwendet der Ziel-Knoten die Identität des ersten Knotens auf dem Stapel, um das Bestätigungspaket bzw. die Ping-Antwort auf dem selben Pfad zurück zu senden.

Ferner offenbart die US 7 940 695 B1 ein Ping-Modus zum Testen von End-zu-End Verbindungen eines LSP, bei dem ein MPLS Echoanforderungspaket gesendet wird, um den Status der Konnektivität mit dem Ausgangs-LSR des LSP zu testen. Im Traceroute-Modus wird ermittelt, über wie viele Vermittlungsknoten das Paket geführt wurde, um den Ausgangs-LSR zu erreichen, wobei jeder Vermittlungsknoten sowie die Weiterleitungsdauer identifiziert und angezeigt wird.

Aufgabe der vorliegenden Erfindung besteht darin, die oben genannten Nachteile zu beseitigen. Diese Aufgabe löst die vorliegende Erfindung mit den in den unabhängigen Ansprüchen definierten Merkmalen. Vorteilhafte Weiterbildungen der vorliegenden Erfindung sind jeweils in den Unteransprüchen angegeben.

Die vorliegende Erfindung nutzt vorhandene, bislang jedoch nicht genutzte Funktionen einer MPLS Label Austausch Matrix in MPLS Kantenroutern. Besondere Aspekte der vorliegenden Erfindung:
- Es werden einem Kantenrouter sogenannte Mess-Pakete zugesendet, die mit MPLS Labeln versehen sind.
- Gemäß einer bevorzugten Realisierung der vorliegenden Erfindung schleift der Kantenrouter die Datenpakete auf einen MPLS Pfad zum Ziel, indem der Kantenrouter das obere Label bzw. die obere Adresse des Label-Stapels bzw. Adress-Stapels vom Datenpaket austauscht, anstatt es wie bisher im Stand der Technik zu ergänzen. Je nach Betriebsweise eines MPLS Kernnetzes kann der Kantenrouter zuerst das obere Label entfernen und tauscht erst dann die obere Adresse des Label-Stapels bzw. Adress-Stapels vom Datenpaket aus.
- Nach der vorliegenden Erfindung wird ferner der Label-Stapel eines Mess-Pakets nicht durch ein Routing-Protokoll festgelegt, sondern durch ein externes Mess-Pakete Steuersystem.

Die Kombination dieser erfindungsgemäßen Mechanismen macht es möglich, MPLS Pakete über eine Reihe von durch das Steuersystem für Mess-Pakete vorgegebene MPLS Kantenrouter zu einem Ziel-Kantenrouter zu schleifen. Vorteilhafterweise ist dazu neben einer Standard-Weiterleitung keine besondere Funktionalität in MPLS Kantenroutern notwendig, wie z.B. MPLS- oder IP-echo request/reply Funktionen.

Im Folgenden wird der Begriff Kantenrouter und MPLS Kantenrouter mit identischer Bedeutung verwendet. Mit der vorliegenden Erfindung kann eine beliebige Anzahl von Kantenroutern in den Übertragungsweg eines Mess-Pakets, einer sogenannten Messchleife, einbezogen werden. Ferner sind dazu keine oder nur geringfügige Konfigurationen an bestehenden Kantenroutern erforderlich. Zudem muss die Weiterleitungsebene während einer Messung nach oder vorliegenden Erfindung nicht verlassen werden. Ferner kann zur Anwendung der Erfindung existierende Software für Kantenrouter verwendet werden.

Gemäß einer bevorzugten Ausführungsform der vorliegenden Erfindung wird das oberste Label bzw. die oberste Adresse des Label-Stapels bzw. Adress-Stapels eines MPLS Datenpakets am vorletzten MPLS Vermittlungsknoten oder am Ziel Kantenrouter entfernt. Darunter wird entweder ein IPv4 Paket freigelegt oder ein "Virtuelle Verbindung Label" oder VV-Label (bei RFC 4046, VC label). Ein IPv4 Paket wird in dem Kantenrouter geroutet. Ein VV-Label wird von dem Kantenrouter entfernt und das Paket wird an die physikalische oder logische Schnittstelle gesendet, die das VV-Label identifiziert. Bei einem sogenannten "Multi-Segment Pseudowire" kann das VV-Label auch ausgetauscht und um ein weiteres Transport-Label ergänzt werden. Es sind auch zusätzliche Label möglich, wie etwa das Entropie-Label, das in einem Label-Stapel auftauchen kann, für die vorliegende Erfindung jedoch ohne Bedeutung ist.

Mit der vorliegenden Erfindung kann ein Mess-Paket mit Hilfe eines Mess-Pakete Steuersystems so aufgebaut werden, dass das an einem Ziel-Kantenrouter empfangene Paket zu einem anderen Ziel-Kantenrouter weiter geleitet wird, wobei letzterer auch der Ursprungs- oder Absender-Kantenrouter oder ein beliebiger anderer Kantenrouter sein kann. Wie viele und welche Label in einem der Messpakete gestapelt sind, kann durch das Mess-Paket Steuersystem bestimmt werden. Dabei können die vom Mess-Paket Steuersystem festgelegten Label-Stapel auch den Label-Stapeln der bekannten Routing und MPLS VPN oder Pseudo-Wire Protokollen entsprechen. Es sind aber auch Label-Stapel möglich, wie sie durch bereits bekannte Routing und MPLS VPN oder Pseudo-Wire Protokolle nicht erzeugt werden können. In einem solchen Fall wird eine beliebige und kontrolliert konfigurierbare Reihenfolge von Kantenroutern durchlaufen, ohne dass dort spezielle und über LDP oder RSVP TE hinaus gehende Routingprotokolle oder Funktionen aktiv sein müssen.

Im Folgenden wird die vorliegende Erfindung anhand von bevorzugten Ausführungsbeispielen unter Bezugnahme auf die beigefügten Zeichnungen näher erläutert. Es zeigen:
- Figur 1: eine schematische Darstellung eines MPLS Datenpaket-Transports in einem verbindungslos gerouteten MPLS Daten-Netzwerk nach Stand der Technik;
- Figur 2: eine schematische Darstellung des Einlese-Prozesses eines MPLS Mess-Paket Steuersystems gemäß einer Ausführungsform der vorliegenden Erfindung zur Vorbereitung eines MPLS Datenpaket-Transports in einem verbindungslos gerouteten MPLS Daten-Netzwerk;
- Figur 3: eine schematische Darstellung eines MPLS Datenpaket-Transports in einem verbindungslos gerouteten MPLS Daten-Netzwerk gemäß einer Ausführungsform der vorliegenden Erfindung; und
- Figur 4: eine schematische Darstellung eines geschleiften MPLS Datenpaket-Transports in einem verbindungslos gerouteten MPLS Daten-Netzwerk gemäß einer Ausführungsform der vorliegenden Erfindung.

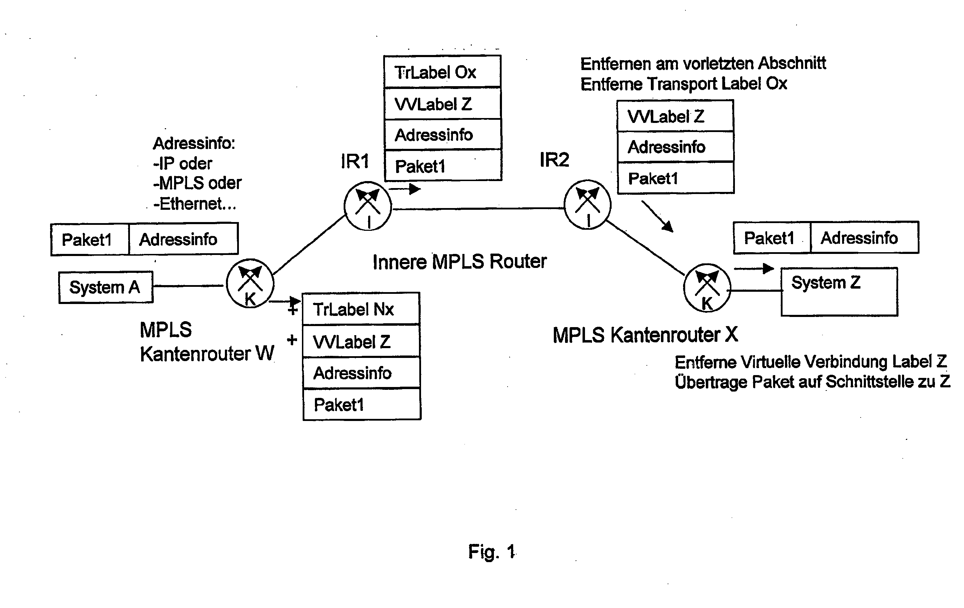

Fig. 1 ist eine schematische Darstellung einer klassischen MPLS Vermittlung am Beispiel eines MPLS Paket-Transports in einem verbindungslos gerouteten MPLS Daten-Netzwerk nach dem Stand der Technik. Dabei umfasst das Netzwerk ein Absender-System A, das ein Datenpaket 1 an ein Empfänger-System Z sendet. Auf dem Weg vom absendenden System A zum empfangenden System Z passiert das Datenpaket 1 den MPLS Kantenrouter W, die beiden inneren MPLS Router IR1 und IR2 sowie den MPLS Kantenrouter X.

Bei dem in Fig. 1 dargestellten Beispiel für den Stand der Technik soll vom absendenden System A ein Zielsystem mit der Adresse Z erreicht werden, wobei Z die Ziel-AdressInformation, ein MPLS Label, eine IPv4- oder Ethernet-Adresse sein kann.

Das absendende System A sendet ein zu übertragendes Datenpaket 1 an den MPLS Kantenrouter W, der direkt mit dem absendenden System A verbunden ist. Das Datenpaket 1 umfasst einen Adress-Stapel bzw. Label-Stapel, der zumindest eine Transport Adresse bzw. ein Service Label S enthält. Der MPLS Kantenrouter W fügt dem Label-Stapel des Datenpakets 1 ein Transport Label Mx sowie ein Virtuelles Verbindung Label Z hinzu und sendet das Datenpaket 1 an einen inneren MPLS Router des MPLS Übertragungspfads weiter.

Der innere MPLS Router vor dem Kantenrouter X entfernt aus dem Label-Stapel das Transport Label Nx und sendet das Datenpaket 1 mit dem Virtuellen Verbindung Label Z an den MPLS Kantenrouter X, der mit dem empfangenden Zielsystem Z verbunden ist. Der MPLS Kantenrouter X entfernt aus dem Label-Stapel das Virtuelle Verbindung Label Z und überträgt das Datenpaket 1 auf die Schnittstelle zum Zielsystem Z. Mit dem Stand der Technik lassen sich üblicherweise nur Pakete von aus dem Anschlussnetz eines Kantenrouters zu dem Anschlussnetz eines anderen Kantenrouters senden. Ausnahmen bilden die Protokolle VCCV, RSVP-TE und Multi-Segment Pseudo Wire, die aber alle wiederum zusätzliche Protokolle und Funktionen erfordern. Die hier dargestellte Erfindung benötigt nur MPLS Pfade, die mit dem Protokoll LDP nach Stand der Technik aufgesetzt werden.

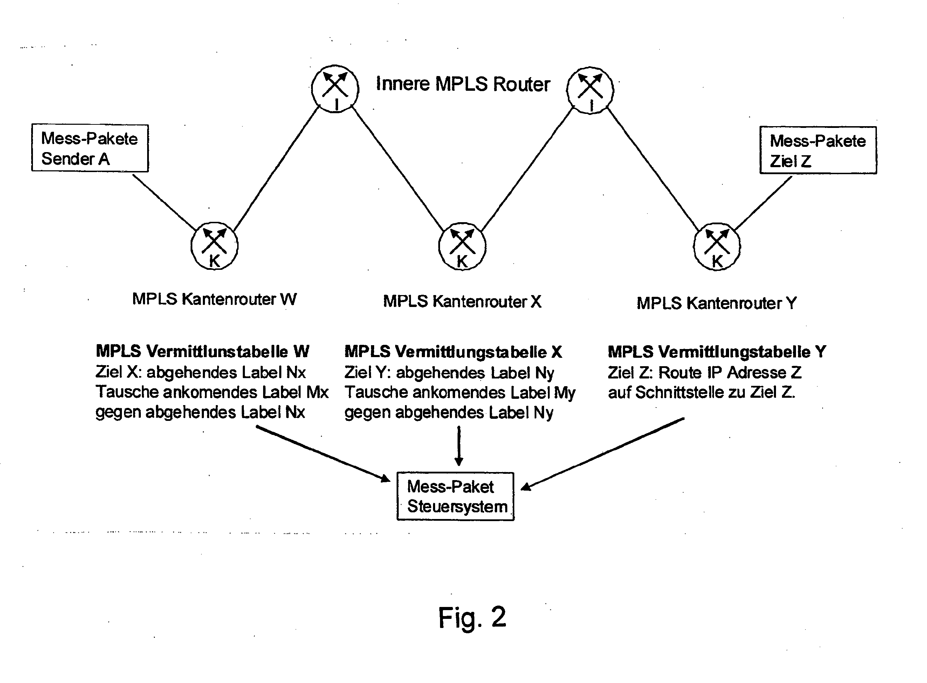

Ein Ziel der Erfindung besteht darin, dass das Mess-Paket (Paket 1) von dem absendenden System A aus die Vermittlungsknoten bzw. Kantenrouter W, X und Y in dieser Reihenfolge zu durchlaufen, bevor die Zieladresse Z erreicht wird. Die dafür notwendige Vermittlungsinformation ist wie in Fig. 2 gezeigt jeweils nur lokal auf den Kantenroutern W, X und Y hinterlegt.

Das absendende System A ist direkt mit dem Kantenrouter W verbunden, hat aber keine sogenannte "Routing"-Beziehung zum MPLS Kantenrouter X. In dem dargestellten Beispiel soll das absendende System A jedoch mit Labeln versehene MPLS Pakete an den MPLS Kantenrouter X senden, die der Kantenrouter Y wie MPLS Pakete behandelt und die der Kantenrouter W auf anderen MPLS Schnittstellen empfängt.

Um den Pfad Kantenrouter W, X und Y wie gewünscht zu durchlaufen, muss das MPLS Mess-Paket Steuersystem nun für die Zusammenstellung des Label-Stapels des MPLS Mess-Pakets (Paket 1) folgende Informationen ermitteln, um daraus einen nach dem Stand der Technik bisher nicht existierenden Label-Stapel für ein Messpaket zusammenstellen. Dies kann auf folgende Weise geschehen:
1. Die Ziel-Adressinformation des Ziel-Systems Z in Form einer IPv4 Adresse oder eines Labels, mit dem ein empfangenes Paket vom Kantenrouter Y korrekt zum Zielsystem Z geleitet wird. Alternativ kann auch die logische bzw. physikalische Schnittstelle ermittelt werden, an die das Zielsystem angeschlossen ist.
2. Das ankommende Label My des Mess-Pakets, das vom Kantenrouter X mit dem Label Ny ersetzt wird und auf dem MPLS Pfad zum Kantenrouter D gesendet wird.
3. Das ankommende Label Mx, das vom Kantenrouter W mit dem Label Nx ersetzt wird und auf den MPLS Pfad zum Kantenrouter X gesendet wird.

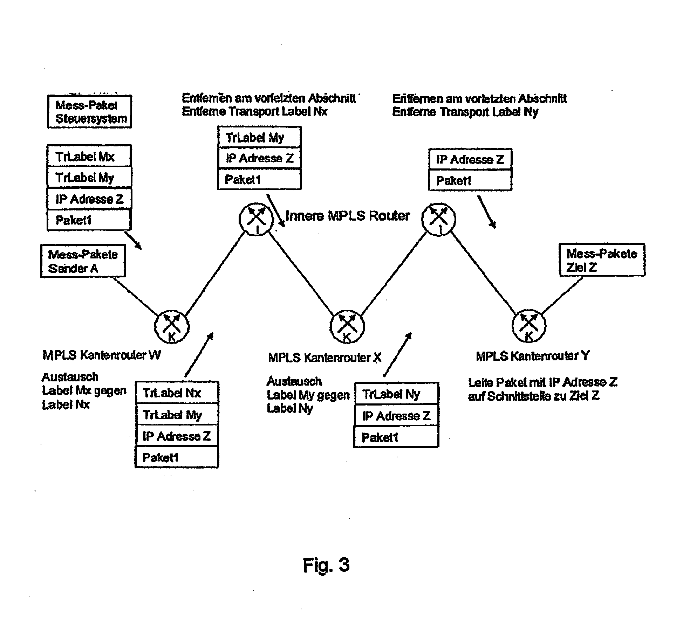

Diese Vorgehensweise erfolgt bei dem in Fig. 3 dargestellten Beispiel, indem das MPLS Paket-Steuersystem vorab, wie in Fig. 2 dargestellt, die in den Kantenroutern W, X und Y vorhandene Label Vermittlungsinformation ausliest. Hierfür gibt es nach dem Stand der Technik verschiedene Möglichkeiten, etwa über Netzmanagement-Schnittstellen der Kantenrouter W, X und Y. Der Prozess der Paketversendung entsprechend der Erfindung wird in Fig. 3 dargestellt und weiter unten erläutert.

Verbindungsorientierte Protokolle wie MPLS TP oder Ethernet setzen voraus, dass an einem Kantenrouter oder Router immer sowohl der Hin- als auch der Rückpfad für Pakete zwischen zwei Vermittlungsknoten vorhanden sind. Das heißt, dass rekursive Datenleitungspfade bzw. sogenannte Schleifen angelegt werden müssen. Dadurch lässt sich ein rekursiver Datenleitungspfad bzw. eine Schleife zwischen zwei Vermittlungsknoten einrichten. Die vorliegende Erfindung ermöglicht aber darüber hinaus eine Schleifung in vorbindungslosen gerouteten MPLS Netzen, in denen an einem Kantenrouter X ein Pfad zurück zu einem Kantenrouter W vorhanden ist oder eingerichtet werden kann, der mit den bislang bekannten Protokollen und Mechanismen nicht nutzbar war.

Mit der in Fig. 1 dargestellten MPLS Datenübertragung nach dem Stand der Technik und den bislang bekannten Protokollen und Lösungsansätzen wäre lediglich eine Rückschleifung der zu übermittelnden MPLS Messpakete auf Weiterleitungsebene mit zusätzlichen Protokollen oder Funktionen der betreffenden Kantenrouter denkbar, was nur mit erhöhtem Aufwand und zusätzlichen Protokollen erreicht werden könnte. Solche mehrfachen Protokolle sowie zusätzlichen Funktionen oder modifizierte Software der Kantenrouter und den damit verbundenen Aufwand vermeidet die vorliegende Erfindung.

Bei der hier beschriebenen Erfindung werden MPLS Mess-Pakete über eine Messschleife bestehenden aus einer Kette von zwei oder mehr Kantenroutern transportiert, wobei die Mess-Pakete eine beliebige Nutzlast enthalten können, wie z.B. eine Sequenznummer, einen Zeitstempel oder andere beliebige Daten. Die Adress- bzw. Label-Information, für welche die "Messschleife" als Kette der zu durchlaufenden Kantenrouter festgelegt wird, erhalten die Mess-Pakete von einem Mess-Paket Steuersystem, das mit der vorliegenden Erfindung eingeführt wird. Um diese Label-Stapel der Mess-Pakete aufsetzen zu können, muss das MPLS Paket-Steuersystem die Label Vermittlungstabellen (auch "Label Cross Connect Tabelle" genannt) und die Tabellen mit den gleichen Weiterleitungsklassen (FEC Tabelle) der in einer Messschleife befindlichen Kantenrouter kennen.

Die vorliegende Erfindung macht sich die Standard Label-Verbindungstabellen aller beteiligten Verbindungsknoten bzw. Router nach dem Stand der Technik zunutze, wobei diese durch die erfindungsgemäße Handhabung nicht beeinflusst oder verändert werden müssen. Dagegen nutzt die vorliegende Erfindung die Leistung bzw. vollständigen Inhalte der Label-Verbindungstabellen, die somit die Grundlage für die Funktionsweise der Erfindung darstellen.

Nachfolgend sind jeweils die Label-Verbindungstabellen für die in Figuren 1 und 3 dargestellten Kantenrouter angegeben. Dabei bezeichnet die erste Tabellenspalte jeweils die Label mit Adressdaten des Label-Stapels bzw. Adress-Stapels eines bei dem betreffenden Verbindungsknoten bzw. Router ankommenden Datenpakets. Die zweite Spalte enthält die Aktion des betreffenden Verbindungsknotens bzw. Routers und dritte Spalte bezeichnet das anstelle des ankommenden Labels vom betreffenden Verbindungsknoten bzw. Router gesendete Label. In der letzten Spalte ist jeweils die Ziel-Adresse oder Sende-Schnittstelle angegeben, zu der das vom betreffenden Verbindungsknoten bzw. Router abgeschickte Datenpaket anschließend gesendet wird:
Label-Verbindungstabelle am Kantenrouter W:

| Ankommendes Label | Aktion | Sende Label | Sende-Schnittstelle |
|---|---|---|---|
| Z | Ergänze Label | Nx | Zu IR1 |
| Mx | Tausche Label | Nx | Zu IR1 |
| S | Verwerfe Label | - | Zu System S |

Label-Verbindungstabelle am inneren Router IR1:

| Ankommendes Label | Aktion | Sende Label | Sende-Schnittstell |
|---|---|---|---|
| Nx | Tausche Label | Ox | Zu IR2 |
| Dw | Verwerfe Label | - | Zu W |

Label-Verbindungstabelle am inneren Router IR2:

| Ankommendes Label | Aktion | Sende Label | Sende-Schnittstell |
|---|---|---|---|
| Ox | Verwerfe Label | - | Zu X |
| Dw | Tausche Label | Ew | Zu IR1 |

Label-Verbindungstabelle am Kantenrouter X:

| Ankommendes Label | Aktion | Sende Label | Sende-Schnittstell |
|---|---|---|---|
| Z | Verwerfe Label | - | Zu System Z |
| C w | Tausche Label | Dw | Zu IR2 |

Wie den oben dargestellten Label-Verbindungstabellen zu entnehmen ist, sind die Kantenrouter so wie die inneren Router dazu in der Lage, Label mit Adressdaten aus dem Label-Stapel bzw. Adress-Stapel eines ankommenden Datenpakets entweder zu verwerfen, auszutauschen oder zu ergänzen. Auf diese Weise kann der Verbindungsknoten bzw. Router ein oder mehrere Labels des Label-Stapels eines ankommenden Datenpakets modifizieren, dass der Label-Stapel des vom Verbindungsknoten bzw. Router weitergeleiteten Datenpakets zumindest ein modifiziertes oder neues Label umfasst, der die Adressinformationen der anschließenden Sende-Schnittstelle enthält.

Gemäß einem Aspekt der vorliegenden Erfindung werden beispielsweise das Label Mx am Kantenroter W und das Label Cw am Kantenrouter X wie bei inneren Routern benutzt, wofür bereits bestehende Funktionen der Kantenrouter verwendet werden können. Nach der vorliegenden Erfindung kann beispielsweise nach dem Verwerfen eines Labels (etwa Ox) als nächstes nur ein Label-Tausch erfolgen, weil dann das obere Label Cw ist. Dies kann mit den Standard-Funktionen der Kantenrouter erfolgen.
Mit dem Stand der Technik ist im Gegensatz hierzu immer ein weiteres Verwerfen oder Ergänzen von Labeln im Label-Stapel vorgesehen.

In Fig. 2 ist der erfindungsgemäße Einlese-Prozess des MPLS Mess-Paket Steuersystems dargestellt, der sich aus dem oben beschriebenen Ermittlungen des MPLS Mess-Paket Steuersystems von Adressinformationen aus einem MPLS Mess-Paket ergibt. Der Einlese-Prozesses mit Hilfe eines MPLS Mess-Paket Steuersystems dient der Vorbereitung eines MPLS Datenpaket-Transports in einem verbindungslos gerouteten MPLS Daten-Netzwerk gemäß einer Ausführungsform der vorliegenden Erfindung, die anhand der schematischen Darstellung von Fig. 3 beschrieben wird.

Nach dem in Fig. 2 dargestellten Einlese-Prozesses wird gemäß einer Ausführungsform der vorliegenden Erfindung zunächst ein zu sendendes Mess-Paket durch ein erfindungsgemäßes MPLS Mess-Paket Steuersystem adressiert.

Dazu generiert das MPLS Mess-Paket Steuersystem im Adress- bzw. Label-Stapel eines Mess-Pakets (Paket 1) als äußerstes Label bzw. äußerste Adresse das Transport Label Mx, gefolgt von einem Transport Label My und ferner gefolgt von der IPv4 Adresse oder dem Label Z, das eine IP Adresse sein kann. Falls Z ein Label ist, können dem Label-Stapel des Mess-Pakets 1 auch noch weitere Adressinformationen zugefügt werden. Der so entstehende Label-Stapel wird in Fig. 3 dargestellt.

Nun sendet das absendende System A wie in Fig. 3 dargestellt das entsprechend adressierte Paket 1 an den Kantenrouter W. Der Kantenrouter W fügt dem Label-Stapel des Mess-Pakets 1 die Adressinformationen des folgenden Kantenrouters X hinzu, indem er das empfangene Transport Label Mx gegen das Transport Label Nx austauscht. Anschließend leitet der Kantenrouter W das Paket 1 weiter an einen ersten inneren. MPLS Router, der auf dem Übertragungsweg des MPLS Pakets 1 vor dem Kantenrouter X liegt.

Nun ergibt sich die Möglichkeit, dass der erste innere MPLS Router vor dem Kantenrouter X das obere MPLS Label bzw. die obere MPLS Adresse aus dem Adress- bzw. Label-Stapel des Mess-Pakets 1 entfernt. Alternativ kann auch der Kantenrouter X selbst das obere MPLS Label aus dem Label-Stapel des Datenpakets 1 entfernen. Die vorliegende Erfindung kann auf beide Alternativen angewendet werden, nämlich dass der innere MPLS Router das obere MPLS Label vor dem Kantenrouter X entfernt oder der Kantenrouter X selbst das obere MPLS Label entfernt.

Dabei ist der Wert des betreffenden Labels für die Anwendung und Ausführung der Erfindung ohne besondere Bedeutung, denn unabhängig vom Wert des betreffenden Labels taucht das Mess-Paket 1 in der Vermittlungsmatrix des Kantenrouters X in beiden Fällen mit dem oberen Transport Label My auf, das vom Kantenrouter X durch das Transport Label Ny ersetzt wird.

Die weiteren Erläuterungen der Erfindung basieren auf der Vorgehensweise, dass der innere MPLS Router vor dem Kantenrouter X das obere MPLS Label vom Mess-Paket 1 entfernt, was nachfolgend als "Entfernen des Labels am vorletzten Abschnitt" bezeichnet wird und als Grundlage für die folgenden Ausführungen zur vorliegenden Erfindung angenommen wird.

Im weiteren Verlauf des in Fig. 2 und Fig. 3 dargestellten Übertragungswegs von Kantenrouter W zu Kantenrouter X zu Kantenrouter Z sendet der erste innere MPLS Router das Mess-Paket 1 an den Kantenrouter X mit der MPLS Vermittlungstabelle X, der dem Adress- bzw. Label-Stapel des Mess-Pakets 1 die Adressinformationen des folgenden Kantenrouters Y hinzufügt, indem er das empfangene Transport Label My aus dem Label-Stapel des Mess-Pakets 1 gegen das Transport Label Ny austauscht. Anschließend leitet der Kantenrouter X das Mess-Paket 1 weiter an einen zweiten inneren MPLS Router, das auf dem Übertragungsweg des MPLS Pakets 1 vor dem Kantenrouter Y liegt.

Dieser zweite innere MPLS Router leitet das MPLS Paket 1 weiter an den Kantenrouter Y mit der MPLS Vermittlungstabelle Y, der mit dem empfangenden Zielsystem Z verbunden ist. Der Kantenrouter Y entnimmt dem Label-Stapel des Mess-Pakets 1 die Adressinformationen des Zielsystems aus dem Label IP Adresse Z und überträgt es anschließend an die Schnittstelle zum Zielsystem Z. Damit ist der Übertragungsweg des Mess-Pakets 1 vom absendenden System A zum empfangenden Zielsystem Z vollständig.

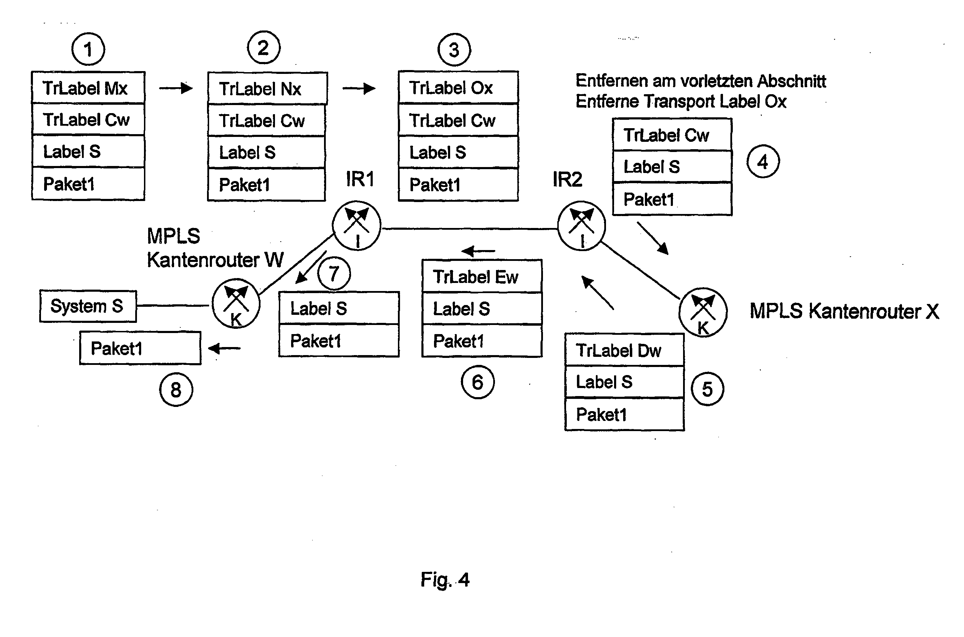

In Fig. 3 ist der Ablauf eines MPLS Datenpaket-Transports nach der vorliegenden Erfindung schematisch dargestellt. Wenn das Mess-Paket 1 zu dem ursprünglich absendenden System A zurück gesendet bzw. zurück geschleift werden soll, dann muss der Kantenrouter Y identisch sein mit dem Kantenrouter W und die Zieladresse Z der Adresse vom System A entsprechen. Dadurch entsteht ein rekursiver Leitungsweg bzw. eine Schleife, auf der ein Mess-Paket 1 vom System A abgesendet wird, vom Kantenrouter W zum Kantenrouter X weitergeleitet und vom Kantenrouter X zurück zum Kantenrouter W und dem daran angebundenen System A geschleift wird. Eine solche Schleife wird in Fig. 4 dargestellt und im Folgenden erläutert.

Die vorliegende Erfindung erlaubt und ermöglicht es, solche rekursive Übertragungs-Schleifen über eine beliebige Anzahl von MPLS Kantenroutern und zu beliebigen Zielen aufzubauen.

In Fig. 4 ist der Ablauf eines geschleiften MPLS Datenpaket-Transports nach der vorliegenden Erfindung schematisch dargestellt. Das in Fig. 4 dargestellte MPLS Daten-Netzwerk umfasst ein absendendes System S, das gleichzeitig das Zielsystem ist, weil ein Daten-Messpaket (Paket 1) vom System S auf einer Schleife durch das Netzwerk wieder zum System S zurückgeschleift wird. Dabei wird das Datenpaket 1 über einen ersten MPLS Kantenrouter W zu einem ersten inneren MPLS Router IR1 weiter zu einem zweiten inneren MPLS Router IR2 bis zu einem zweiten Kantenrouter X geleitet und auf demselben umgekehrten Weg wieder zurück zum System S geschleift. Der Transportweg des Datenpaktes verläuft somit über die Verbindungsknoten in einer Schleife S - W - X - W - S.

Die einzelnen Stationen auf dem Weg des geschleiften MPLS Datenpaket-Transports sind in Fig. 4 entsprechend der Reihenfolge mit eingekreisten Zahlen von 1 bis 8 gekennzeichnet. An der ersten Station 1 wird für das Datenpaket zunächst ein Label-Stapel erzeugt, der Ziel-Adress-Information (Label S), in Form eines MPLS Labels, einer IPv4- oder Ethernet-Adresse sowie ein Transport Label Mx und ein Transport Label Cw umfasst.

An der zweiten Station 2 modifiziert der MPLS Kantenrouter W den Label-Stapel des Datenpakets 1, indem er das Transport Label Mx gegen ein neues oder modifiziertes Transport Label Nx austauscht und sendet das Datenpaket 1 an den ersten inneren MPLS Router IR1 weiter. Dabei stellt das Label N und der Index x jeweils einen Zahlenwert dar, der den Ziel Kantenrouter X identifiziert.

An der dritten Station 3 modifiziert der erste innere MPLS Router IR1 den Label-Stapel des Datenpakets, indem er das Transport Label Nx gegen ein neues oder modifiziertes Transport Label Ox austauscht und sendet das Datenpaket an den zweiten inneren MPLS Router IR2 am vorletzten Abschnitt des MPLS Übertragungspfads weiter.

Die vierte Station 4 kennzeichnet den vorletzten Abschnitt des MPLS Übertragungspfads, an dem der zweite innere MPLS Router IR2 den Label-Stapel des Datenpakets modifiziert, indem er das Transport Label Ox entfernt, und legt damit das darunter liegende Transport Label Cw frei. Anschließend sendet der zweite innere MPLS Router IR2 das Datenpaket an den zweiten MPLS Kantenrouter X weiter.

An der fünften Station 5 des MPLS Übertragungspfads modifiziert der zweite MPLS Kantenrouter X den Label-Stapel des Datenpakets, indem er das Transport Label Cw gegen ein neues oder modifiziertes Transport Label Dw austauscht und sendet das Datenpaket 1 an den zweiten inneren MPLS Router IR2 zurück. Mit dem neuen Transport Label Dw sind die Adressinformationen des neuen Ziel Kantenrouters W im Label-Stapel identifiziert.

An der sechsten Station 6 des Datenpaket-Transportwegs modifiziert der zweite innere MPLS Router IR2 den Label-Stapel des Datenpakets, indem er das Transport Label Dw gegen ein neues oder modifiziertes Transport Label Ew austauscht und sendet das Datenpaket an den ersten inneren MPLS Router IR1 weiter. An der siebten Station 7 des Datenpaket-Transportwegs entfernt der erste innere MPLS Router IR1 aus dem Label-Stapel das Transport Label Dw und legt damit das darunter liegende Label S frei, das die Adressinformationen des Start bzw. Ziel Systems S enthält.

An der achten und letzten Station 8 des Datenpaket-Transportwegs entfernt der erste MPLS Kantenrouter W aus dem Label-Stapel nun das letzte Label S und leitet das Datenpaket an das Start/Ziel Systems S weiter.

Die vorliegende Erfindung gestaltet insbesondere den vorletzten Abschnitt des MPLS Übertragungspfads auf neuartige Weise, was oben unter Bezugnahme auf die fünfte Station 5 des Datenpaket-Transportwegs erläutert wurde. Demnach ist das Label, das vom inneren MPLS Router am vorletzten Abschnitt des MPLS Übertragungspfads im Label-Stapel des Datenpakets nach dem Entfernen von Ox freigelegt wird, das Transport Label Cw, das vom Kantenrouter X ausgetauscht wird. Dieses Transport Label Cw ist im Kantenrouter X nicht als ein Label eingetragen, dessen Pakete auf eine lokale Kundenschnittstelle geführt werden. Zu diesem Zweck wird der Labelstapel eines Datenpakets nach der vorliegenden Erfindung auf eine neuartige Weise zusammengestellt, wie hier beschrieben.

Zur Durchführung der vorliegenden Erfindung sind daher keine neuen technischen Merkmale oder Funktionen von Kantenroutern erforderlich, sondern es können bisher bekannte Kantenrouter mit bekannten Funktionen verwendet werden. Die vorliegende Erfindung bedient sich somit bestehender Technologie und setzt bereits vorhandene technische Merkmale auf eine neuartige und vorteilhafte Weise ein.

Mit den bislang bekannten Protokollen und Lösungsansätzen konnte jedoch eine Schleife bzw. ein rekursiver Leitungsweg für die zu übermittelnden MPLS Messpakete nicht realisiert werden, bei dem, wie in Fig. 3 gezeigt, ein MPLS Messpaket zunächst vom Kantenrouter W zum Kantenrouter X und dann zurück zum Kantenrouter W geleitet bzw. geschleift wird, wobei der Kantenrouter X protokollarisch vollständig in der MPLS Weiterleitungsebene verbleibt.

Die vorliegende Erfindung erlaubt damit über den Stand der Technik hinaus die Bildung rekursiver Leitungspfade bzw. Schleifen von MPLS Mess-Paketen allein auf der MPLS Weiterleitungsebene. Mit dem Stand der Technik kann nur die Funktion VCCV eines MPLS Kantenrouters ein Mess-Paket auf VVEbene zurück zu einem Kantenrouter schleifen. Hierzu wird aber neben den Pfaden der Weiterleitungsebene für jede zu nutzende Schleife ein zusätzlich aufzubauender Pseudo Wire benötigt. Im Gegensatz hierzu nutzt die Erfindung ausschließlich bereits existierende Pfade der Weiterleitungsebene. Auch MPLS echo request und echo reply nutzen ein anderes Verfahren als die Erfindung, da sie in dem schleifenden Kantenrouter die MPLS Weiterleitungsebene verlassen, von dem Kantenrouter bearbeitet und erst dann wieder gesendet werden.

Mit den bislang bekannten Protokollen und Lösungsansätzen können Übermittlungswege von MPLS Paketen bzw. Schleifen über beliebige Kantenrouter generell nur mit erheblichem Aufwand realisiert werden, da zusätzliche Tunnel, externe Geräte, sequentielle Messungen oder ähnliches dazu notwendig sind. Mit herkömmlichen Mitteln wäre beispielsweise eine Schleifung mehrerer MPLS Kantenrouter auf reiner MPLS Weiterleitungsebene mit zusätzlichen Protokollen oder Funktionen der Kantenrouter denkbar.

Die vorliegende Erfindung vermeidet den mit dem Stand der Technik verbundenen technischen und protokollarischen Aufwand durch eine Datenweiterleitung, bei der ein MPLS Kantenrouter ein mit einem MPLS Label empfangenes Paket weiterleitet und dabei ein Label des Pakets durch ein anderes Label austauscht, wodurch Informationen, insbesondere Adressen-Informationen, die im Label enthalten sind, ausgetauscht werden. Für die Anwendung der Erfindung ist es dabei nicht von Bedeutung, wie dieser Austausch von Informationen in dem Kantenrouter eingerichtet wird.

Nach einem Aspekt der vorliegenden Erfindung wird ein Mess-Paket Steuersystem festgelegt, das MPLS Label Stapel sowie die Ziel-Adressierung von Mess-Paketen festlegt. Dazu erhält das Mess-Paket Steuersystem die notwendige MPLS Label Information und Ziel-Adressinformation vorab, was auf beliebige geeignete Weise erfolgen kann und mit vorhandener Technik problemlos umgesetzt werden. Wesentliche Vorteile der vorliegenden Erfindung ergeben sich daher aus der Kombination mit Funktionen vorhandener Technik und der daraus entstehenden neuartigen Lösung.

Mit der vorliegenden Erfindung tauscht jeder Kantenrouter auf dem Übertragungsweg des MPLS Pakets zumindest einen Teil des Label-Stapels, insbesondere ein Label aus dem Label-Stapel des MPLS Pakets aus, wobei in dem eingetauschten Label, das der Kantenrouter an Stelle des ausgetauschten Labels im Label-Stapel des MPLS Pakets platziert, in dem zumindest die Adressinformation des auf dem Leitungsweg des Datenpakets nachfolgenden Kantenrouters enthalten ist. Dadurch legt jeder Kantenrouter auf dem Übertragungsweg des MPLS Pakets von einem Absender zum Adressaten seine Adressdaten und/oder die Adressaten des auf dem Leitungsweg des Datenpakets folgenden Kantenrouters im Label-Stapel des MPLS Pakets ab.

Mittels der vorliegenden Erfindung kann im Adress-Stapel bzw. Label-Stapel eines MPLS Pakets Adressinformationen für eine beliebige Anzahl von Kantenroutern in Form einer beliebig langen Kette von MPLS Kantenroutern W, X, Y... abgelegt werden, die das MPLS Paket auf seinem Übertragungspfad vom Absender bis zum Ziel passiert. Dieses Adressieren des Label-Stapels eines MPLS Pakets erfolgt erfindungsgemäß von oben vom obersten Label bzw. von der obersten Adresse nach unten bis zum untersten Label bzw. zur untersten Adresse der MPLS Kantenrouter in der Reihenfolge der auf seinem Übertragungspfad vom Absender bis zum Ziel zu durchlaufenden MPLS Kantenrouter. Im Gegensatz zum Stand der Technik kann dieser Label-Stapel somit aus mehreren MPLS Labeln bestehen, welche die zu passierenden MPLS Kantenrouter identifizieren.

Auf diese Weise ist im Adress- bzw. Label-Stapel des MPLS Pakets die gesamte Information zum Übertragungsweg enthalten, auf dem das MPLS Paket übermittelt wurde, einschließlich der Adressdaten jedes Kantenrouters, den das MPLS Paket auf dem Übertragungsweg vom Absender bis zum Adressaten passiert hat. Anhand dieser Information kann das MPLS Paket auf demselben Übertragungsweg auch wieder zum Adressaten zurück geschleift werden, ohne dass es weitere Protokolle oder zusätzlicher Funktionen der Vermittlungsknoten bzw. Kantenrouter bedarf. Die vorliegende Erfindung kombiniert somit vorhandene Technik und bekannte Funktionen mit einer neuartigen Vorgehensweise und Handhabung von MPLS Paketen in verbindungslosen Netzwerken bei deren Schleifung zwischen Absender- und Zieladresse.

Ein erfindungsgemäßes MPLS Paket Steuersystem kann ferner dazu in der Lage sein, rekursive Übertragungswege oder Schleifen für MPLS Pakete über eine Anzahl von MPLS Vermittlungsknoten einzurichten, ohne dass ein die MPLS Pakete sendendes Gerät oder ein die MPLS Pakete empfangendes Gerät am Routing der MPLS Vermittlungsknoten teilnehmen muss. Sondern es genügt dazu eine fest eingestellte Vermittlung von MPLS Paketen jeweils von dem Vermittlungsknoten zu dem bei ihm angeschalteten sendenden oder empfangenden Gerät.

## Patentansprüche

1. Verfahren zum Übermitteln von MPLS Paketen in verbindungslosen Netzwerken, wobei das MPLS Paket auf einem Übertragungsweg zwischen einem Absender und einem Ziel eine Anzahl von inneren MPLS Vermittlungsknoten passiert sowie mindestens zwei MPLS Kantenrouter (W, X, Y), die jeweils einen Übergang zwischen einem Kernnetzwerk und einem Anschlussnetzwerk darstellen, **dadurch gekennzeichnet,** dass ein Adress-Stapel oder Label-Stapel für ein zu versendendes MPLS Paket erzeugt wird, der Adressinformationen zu den auf seinem Übertragungsweg zu passierenden inneren Vermittlungsknoten sowie Adressinformationen für die auf seinem Übertragungsweg zu passierenden mindestens zwei Kantenrouter (W, X, Y) umfasst.

2. Verfahren nach Anspruch 1, wobei die Kantenrouter (W, X, Y) jeweils beim Passieren des MPLS Pakets zumindest einen Teil des Adress-Stapels oder Label-Stapels des MPLS Pakets entfernt, austauscht und/oder modifiziert.

3. Verfahren nach Anspruch 2, wobei jeder Kantenrouter, den das MPLS Paket auf seinem Übertragungsweg durch das Netzwerk passiert, jeweils zumindest ein Label (Mx, Cw) aus dem Label-Stapel des MPLS Pakets durch ein anderes Label ersetzt, so dass das Label zumindest Adressinformationen des auf dem Leitungsweg des Datenpakets nachfolgenden Vermittlungsknotens und/oder aller auf dem Leitungsweg des Datenpakets nachfolgenden Vermittlungsknoten umfasst.

4. Verfahren nach einem der vorangehenden Ansprüche, wobei jeder Kantenrouter (W, X, Y), den das MPLS Paket auf seinem Übertragungsweg durch das Netzwerk passiert, jeweils ein unterschiedliches Label (Mx, Cw) aus dem ursprünglichen Label-Stapel des MPLS Pakets modifiziert und/oder gegen ein anderes Label austauscht, das Informationen zum betreffenden Kantenrouter (W, X, Y) und/oder Informationen zu den auf dem Leitungsweg des Datenpakets nachfolgenden Vermittlungsknoten umfasst;
und/oder,
wobei jeder Kantenrouter (W, X, Y) ein Datenpaket mit einem Adress-Stapel jeweils an die Adresse weiterleitet, die in dem obersten Label des Label-Stapels enthalten ist, auch und wenn diese Adresse zu einer Weiterleitung zu einem Vermittlungsknoten innerhalb des Kernnetzes führt;
und/oder,
wobei das MPLS Paket anhand der im Label-Stapel hinterlegten Adressinformationen vom ursprünglichen Ziel zum ursprünglichen Absender durch das Netzwerk auf Schleifen über die durch die Adressinformation im Label-Stapel festgelegten Kantenrouter (W, X, Y, W) zurück geleitet werden kann;
und/oder,
wobei das MPLS Paket anhand der von den Kantenroutern (W, X, Y) im Label-Stapel abgelegten Adressinformationen über die betreffenden Kantenrouter (W, X, Y) in der durch die Adressinformation im Label-Stapel festgelegte Reihenfolge der zu durchlaufenden Kantenrouter (W, X, Y) durch das Netzwerk geleitet werden kann;
und/oder,
wobei mindestens ein MPLS Paket mit Label-Stapeln und Ziel-Adressinformation anhand einer MPLS Label Vermittlung und von Adressinformation zu gleichen Weiterleitungsklassen jedes auf dem Übertragungsweg des MPLS Pakets zu durchlaufenden Kantenrouters (W, X, Y) erzeugt werden;
und/oder,
wobei zumindest der erste Kantenrouter (W) auf dem Übertragungsweg des MPLS Pakets durch Verwendung einer Kern-Router-Funktion des Kantenrouters (W) wie ein innerer Vermittlungsknoten genutzt wird.

5. Verfahren nach einem der vorangehenden Ansprüche, wobei von einem ersten Kantenrouter (W) auf dem Übertragungsweg des MPLS Pakets im Label-Stapel des MPLS Pakets ein erstes Transport Label (Mx), das die Adressinformationen des ersten Kantenrouters (W) enthält und ihm von einem System zugesendet wurde, das nicht Teil des IP oder MPLS Kernnetzes sein muss, ersetzt wird durch ein zweites Transport Label (Nx) mit den Adressinformationen eines zweiten Kantenrouters (X), der dem ersten Kantenrouter (W) auf dem Übertragungsweg gemäß der Adressierung des MPLS Pakets folgt, und der erste Kantenrouter (W) anschließend das MPLS Paket an den zweiten Kantenrouter (X) sendet.

6. Verfahren nach dem vorangehenden Anspruch, wobei dem ersten Kantenrouter (W) auf dem Übertragungsweg des MPLS Pakets das erste Transport Label (Mx), das die Adressinformationen des ersten Kantenrouters (W) enthält, von einem System zugesendet wird, das entweder Teil eines des IP oder MPLS Kernnetzes ist oder nicht Teil eines IP oder MPLS Kernnetzes sein kann.

7. Verfahren nach einem der vorangehenden Ansprüche, wobei die Anzahl aller Kantenrouter (W, X, Y) bis auf den Ziel-Kantenrouter (X) auf dem Übertragungsweg des MPLS Pakets durch Verwendung einer Kern-Router-Funktion der Kantenrouter wie innere Vermittlungsknoten genutzt werden.

8. Verfahren nach dem vorangehenden Anspruch, wobei das Ablegen von Adressinformationen für eine Anzahl von Kantenroutern (W, X, Y) vom obersten Label mit der Adressinformation des ersten zu passierenden Kantenrouters (W) bis zum untersten Label mit der Adressinformation des letzten zu passierenden Kantenrouters (Y) in der Reihenfolge der auf dem Übertragungspfad des MPLS Pakets vom Absender bis zum Ziel zu durchlaufenden Kantenrouter (W, X, Y) erfolgt.

9. Verfahren nach einem der vorangehenden Ansprüche, wobei im Adress-Stapel öder Label-Stapel des MPLS Pakets neben der Adressinformation der auf dem Übertragungspfad des MPLS Pakets vom Absender bis zum Ziel zu durchlaufenden MPLS Vermittlungsknoten und Kantenrouter (W, X, Y) ferner Adressinformationen einer Ziel-Adresse beispielsweise in Form eines MPLS Labels, einer IPv4 Adresse, einer IPv6 Adresse oder Ethernet-Adresse enthalten sind.

10. Verfahren nach dem vorangehenden Anspruch, wobei der letzte Kantenrouter (Y) auf dem Übertragungspfad des MPLS Pakets das MPLS Paket anhand der Ziel-Adresse im Adress-Stapel oder Label-Stapel eines MPLS Pakets zu seinem Ziel leitet.

11. Verfahren nach einem der vorangehenden Ansprüche, wobei das Ziel des MPLS Pakets eine logische oder physikalische Schnittstelle eines Kantenrouters (W, X, Y), ein über eine logische oder physikalische Schnittstelle des Kantenrouters (W, X, Y) erreichbare IPv4 Adresse oder eine interne Terminierung des Kantenrouters (W, X, Y), wie z.B. ein Port oder eine OAM Funktion des Kantenrouters (W, X, Y) sein kann;
und/oder,
wobei in einem Kantenrouter (X) zunächst ein Entfernen eines Labels (Px) aus dem Label-Stapel des MPLS Pakets und anschließend ein Austausch eines Labels (Cw) aus dem Label-Stapel des MPLS Pakets erfolgt, ohne dass für eine Weiterleitung des Pakets weitere Veränderungen des Label
Stapels erfolgen müssen;
und/oder,
wobei am letzten inneren Vermittlungsknoten auf dem Übertragungsweg vor einem Kantenrouter (X) ein Entfernen eines Labels (Ox) aus dem Label-Stapel des MPLS Pakets erfolgt und ein Austausch eines Labels (Cw) aus dem Label-Stapel des MPLS Pakets in dem auf dem Übertragungsweg direkt nachfolgenden Kantenrouter (X) erfolgt und das Paket weiterhin im Kernnetz verbleibt.

12. MPLS Paket Steuersystem zum Übermitteln von MPLS Paketen in verbindungslosen Netzwerken, wobei das MPLS Paket auf einem Übertragungsweg zwischen einem Absender und einem Ziel eine Anzahl von inneren MPLS Vermittlungsknoten passiert sowie mindestens zwei MPLS Kantenrouter (W, X, Y), die jeweils einen Übergang zwischen einem Kernnetzwerk und einem Anschlussnetzwerk darstellen, **dadurch gekennzeichnet,** dass das Steuersystem dazu ausgebildet ist, für ein zu versendendes MPLS Paket einen Adress-Stapel oder Label-Stapel zu erzeugen, der Adressinformationen zu den auf seinem Übertragungsweg zu passierenden inneren Vermittlungsknoten sowie Adressinformationen für die auf seinem Übertragungsweg zu passierenden mindestens zwei Kantenrouter (W, X, Y) umfasst.

13. Steuersystem nach dem vorangehenden Anspruch, wobei die Kantenrouter (W, X, Y) dazu ausgebildet sind, jeweils eine Information an das Steuersystem weiterzuleiten, die einen Label-Wert zu einem erreichbaren Ziel-Kantenrouter (X, Y, W) angeben, so dass der die Information abgebende Kantenrouter ein empfangenes Paket, das diesen Label-Wert umfasst, an den entsprechenden Ziel-Kantenrouter (X, Y, W) weiter leitet.

14. Steuersystem nach dem vorangehenden Anspruch, wobei das Steuersystem an einen Kantenrouter (W, X, Y) angeschlossen ist, der dazu eingerichtet ist, auf der Schnittstelle zum Steuersystem MPLS Pakete zu empfangen und gemäß Adressierung der MPLS Pakete weiterzuleiten;
und/oder,
wobei das Steuersystem dazu eingerichtet ist, die in den Verfahrensansprüchen 1 bis 11 definierten Verfahrensschritte durchzuführen, indem die entsprechenden Funktionen des Steuersystems durch MPLS Pakete mit vom Steuersystem generierten MPLS Label-Stapeln genutzt werden.

15. Steuersystem nach einem der Ansprüche 12 bis 14, wobei das Steuersystem dazu eingerichtet ist, Übertragungswege oder Schleifen im Netzwerk für MPLS Pakete über eine Anzahl von Kantenroutern (W, X, Y) zu verwenden, ohne dass eine die MPLS Pakete sendende Vorrichtung (A) oder eine die MPLS Pakete empfangende Vorrichtung (Z) am Routing aller MPLS Vermittlungsknoten, mit Ausnahme der Kantenrouter (W, Y), mit denen die Vorrichtungen (A, Z) verbunden sind, teilnehmen;
und/oder,
wobei mittels MPLS Funktionen und Adressfunktion des MPLS Paket Steuersystems die Adressinformationen im Label-Stapel von zu versendenden MPLS Paketen erzeugt werden;
und/oder,
wobei das Steuersystem als separate Vorrichtung oder als interne Funktion eines Kantenrouters (W, X, Y) realisiert ist;
und/oder,
wobei eine Anzahl von Messeinrichtungen vorgesehen ist, die eine Prüfung der Durchgängigkeit von MPLS Pfaden im Netzwerk durchführen;
und/oder,
wobei das vollständige MPLS Netzwerk und die Übertragungswege der MPLS Pakete mit nur einer Messeinrichtung überwacht werden.

## Claims

1. A method for transferring MPLS packets in connectionless networks, wherein the MPLS packet on a transmission path between a sender and a destination passes a number of inner MPLS switching nodes and also at least two MPLS edge routers (W, X, Y), each of which represents a transition between a core network and a connection network, **characterised in that** an address stack or label stack for an MPLS packet to be sent is produced that comprises address information on the inner switching nodes to be passed on its transmission path and also address information for the at least two edge routers (W, X, Y) to be passed on its transmission path.

2. A method according to claim 1, wherein the edge routers (W, X, Y), each time the MPLS packet passes, remove, exchange and/or modify at least a portion of the address stack or label stack of the MPLS packet.

3. A method according to claim 2, wherein each edge router, which the MPLS packet passes on its transmission path through the network, in each case replaces at least one label (Mx, Cw) from the label stack of the MPLS packet with another label so that the label comprises at least address information of the switching node that follows on the line path of the data packet and/or of all the switching nodes that follow on the line path of the data packet.

4. A method according to one of the preceding claims, wherein each edge router (W, X, Y), which the MPLS packet passes on its transmission path through the network, in each case modifies a different label (Mx, Cw) from the original label stack of the MPLS packet and/or exchanges it for another label that comprises information on the relevant edge router (W, X, Y) and/or information on the switching nodes that follow on the line path of the data packet;
and/or
wherein each edge router (W, X, Y) forwards a data packet with an address stack in each case to the address that is contained in the uppermost label of the label stack also and when this address leads to a forwarding to a switching node within the core network; and/or
wherein the MPLS packet can be guided back with the aid of the address information stored in the label stack from the original destination to the original sender through the network on loops by way of the edge routers (W, X, Y, W) determined by the address information in the label stack;
and/or
wherein the MPLS packet can be guided through the network with the aid of the address information stored by the edge routers (W, X, Y) in the label stack by way of the relevant edge routers (W, X, Y) in the order determined by the address information in the label stack of the edge routers (W, X, Y) to be run through; and/or
wherein at least one MPLS packet with label stacks and destination address information are produced with the aid of MPLS label switching and address information on the same forwarding classes of each edge router (W, X, Y) to be run through on the transmission path of the MPLS packet;
and/or
wherein at least the first edge router (W) on the transmission path of the MPLS packet is utilized by using a core router function of the edge router (W) like an inner switching node.

5. A method according to one of the preceding claims, wherein by a first edge router (W) on the transmission path of the MPLS packet in the label stack of the MPLS packet a first transport label (Mx), which contains the address information of the first edge router (W) and was sent to it by a system that need not be part of the IP or MPLS core network, is replaced with a second transport label (Nx) having the address information of a second edge router (X) which follows the first edge router (W) on the transmission path in accordance with the addressing of the MPLS packet, and the first edge router (W) then sends the MPLS packet to the second edge router (X).

6. A method according to the preceding claim, wherein the first transport label (Mx), which contains the address information of the first edge router (W), is sent to the first edge router (W) on the transmission path of the MPLS packet from a system that can either be part of an IP or MPLS core network or not be part of an IP or MPLS core network.

7. A method according to one of the preceding claims, wherein the number of all the edge routers (W, X, Y) except for the destination edge router (X) on the transmission path of the MPLS packet is utilized by using a core router function of the edge routers like inner switching nodes.

8. A method according to the preceding claim, wherein address information for a number of edge routers (W, X, Y) from the uppermost label with the address information of the first edge router (W) to be passed to the lowermost label with the address information of the last edge router (Y) to be passed is stored in the order of the edge routers (W, X, Y) to be run through on the transmission path of the MPLS packet from the sender to the destination.

9. A method according to one of the preceding claims, wherein contained in the address stack or label stack of the MPLS packet in addition to the address information of the MPLS switching nodes and edge routers (W, X, Y) to be run through on the transmission path of the MPLS packet from the sender to the destination there is furthermore address information on a destination address, for example in the form of an MPLS label, an IPv4 address, an IPv6 address or Ethernet address.

10. A method according to the preceding claim, wherein the last edge router (Y) on the transmission path of the MPLS packet guides the MPLS packet to its destination with the aid of the destination address in the address stack or label stack of an MPLS packet.

11. A method according to one of the preceding claims, wherein the destination of the MPLS packet can be a logical or physical interface of an edge router (W, X, Y), an IPv4 address that can be reached by way of a logical or physical interface of the edge router (W, X, Y) or an internal termination of the edge router (W, X, Y), such as, for example, a port or an OAM function of the edge router (W, X, Y);
and/or
wherein in an edge router (X) in the first instance a label (Px) is removed from the label stack of the MPLS packet and then a label (Cw) from the label stack of the MPLS packet is exchanged, without further changes to the label stack having to be made to forward the packet;
and/or
wherein at the last inner switching node on the transmission path before an edge router (X) a label (Ox) is removed from the label stack of the MPLS packet, and a label (Cw) from the label stack of the MPLS packet is exchanged in the edge router (X) directly following on the transmission path, and the packet continues to remain in the core network.

12. An MPLS packet control system for transferring MPLS packets in connectionless networks, wherein the MPLS packet on a transmission path between a sender and a destination passes a number of inner MPLS switching nodes and also at least two MPLS edge routers (W, X, Y), each of which represents a transition between a core network and a connection network, **characterised in that** the control system is configured to produce an address stack or label stack for an MPLS packet to be sent that comprises address information on the inner switching nodes to be passed on its transmission path and also address information for the at least two edge routers (W, X, Y) to be passed on its transmission path.

13. A control system according to the preceding claim, wherein the edge routers (W, X, Y) are configured to forward respective information to the control system giving a label value for a reachable destination edge router (X, Y, W) so that the edge router delivering the information forwards a received packet, which comprises this label value, to the corresponding destination edge router (X, Y, W).

14. A control system according to the preceding claim, wherein the control system is connected to an edge router (W, X, Y) that is set up to receive MPLS packets on the interface to the control system and to forward them in accordance with the addressing of the MPLS packets;
and/or
wherein the control system is set up to carry out the method steps defined in method claims 1 to 11 in that the corresponding functions of the control system are utilized by MPLS packets with MPLS label stacks generated by the control system.

15. A control system according to one of claims 12 to 14, wherein the control system is set up to use transmission paths or loops in the network for MPLS packets by way of a number of edge routers (W, X, Y) without a device (A) which sends the MPLS packets or a device (Z) which receives the MPLS packets taking part in the routing of all the MPLS switching nodes, with the exception of the edge routers (W, Y) to which the devices (A, Z) are connected;
and/or
wherein the address information is produced in the label stack of MPLS packets to be sent by means of MPLS functions and address functions of the MPLS packet control system;
and/or
wherein the control system is realized as a separate device or as an internal function of an edge router (W, X, Y);
and/or
wherein a number of measuring mechanisms is provided that carry out a check on the continuity of MPLS paths in the network;
and/or
wherein the complete MPLS network and the transmission paths of the MPLS packets are monitored with just one measuring mechanism.

## Revendications

1. Procédé pour transmettre des paquets MPLS dans des réseaux sans connexion, dans lequel le paquet MPLS franchit sur un chemin de transfert entre un émetteur et une cible un nombre de noeuds de commutation MPLS internes ainsi qu'au moins deux routeurs périphériques MPLS (W, X, Y), qui représentent chaque fois une transition entre un réseau de base et un réseau de connexion, **caractérisé en ce que** l'on produit, pour un paquet MPLS à envoyer, un empilement d'adresses ou un empilement d'étiquettes, qui comprend des informations d'adresses relatives aux noeuds de commutation internes à franchir sur son chemin de transfert ainsi que des informations d'adresse pour lesdits au moins deux routeurs périphériques (W, X, Y) à franchir sur son chemin de transfert.

2. Procédé selon la revendication 1, dans lequel les routeurs périphériques (W, X, Y) enlèvent, échangent et/ou modifient respectivement au moins une partie de l'empilement d'adresses ou de l'empilement d'étiquettes lors du passage du paquet MPLS.

3. Procédé selon la revendication 2, dans lequel chaque routeur périphérique, que le paquet MPLS franchit sur son chemin de transfert à travers le réseau, remplace chaque fois au moins une étiquette (Mx, Cw) de l'empilement d'étiquettes du paquet MPLS par une autre étiquette, de telle manière que l'étiquette comprenne au moins des informations d'adresse du noeud de commutation suivant sur la voie d'acheminement du paquet de données et/ou de tous les noeuds de commutation suivants sur la voie d'acheminement du paquet de données.

4. Procédé selon l'une quelconque des revendications précédentes, dans lequel chaque routeur périphérique (W, X, Y), que le paquet MPLS franchit sur son chemin de transfert à travers le réseau, modifie chaque fois une étiquette différente (Mx, Cw) de l'empilement d'étiquettes initial du paquet MPLS et/ou l'échange contre une autre étiquette, qui comprend des informations relatives au routeur périphérique concerné (W, X, Y) et/ou des informations relatives aux noeuds de commutation suivants sur la voie d'acheminement du paquet de données;
et/ou
dans lequel chaque routeur périphérique (W, X, Y) retransmet un paquet de données avec un empilement d'adresses chaque fois à l'adresse qui est contenue dans l'étiquette la plus haute de l'empilement d'adresses, même et si cette adresse conduit à une retransmission à un noeud de commutation à l'intérieur du réseau;
et/ou
dans lequel le paquet MPLS peut être renvoyé, à l'aide des informations d'adresse mémorisées dans l'empilement d'adresses, de la cible initiale à l'émetteur initial à travers le réseau sur des boucles via les routeurs périphériques (W, X, Y, W) définis par l'information d'adresse dans l'empilement d'adresses;
et/ou
dans lequel le paquet MPLS peut être transmis à travers le réseau à l'aide des informations d'adresse mémorisées dans l'empilement d'adresses par les routeurs périphériques (W, X, Y), relatives aux routeurs périphériques concernés (W, X, Y), dans l'ordre des routeurs périphériques à traverser
(W, X, Y) fixé par l'information d'adresse dans l'empilement d'étiquettes;
et/ou
dans lequel au moins un paquet MPLS avec des empilements d'étiquettes et une information d'adresse cible sont produits à l'aide d'une commutation d'adresse MPLS et d'une information d'adresse relative à des classes de transmission identiques de chaque routeur périphérique (W, X, Y) à traverser sur le chemin de transfert du paquet MPLS;
et/ou
dans lequel au moins le premier routeur périphérique (W) sur le chemin de transfert du paquet MPLS est employé en utilisant une fonction de routeur central du routeur périphérique (W) comme un noeud de commutation interne.

5. Procédé selon l'une quelconque des revendications précédentes, dans lequel une première étiquette de transport (Mx), qui contient les informations d'adresse du premier routeur périphérique (W) et qui lui a été envoyée par un système qui ne doit pas faire partie du réseau de base IP ou MPLS, est remplacée par un premier routeur périphérique (W) sur le chemin de transfert du paquet MPLS, dans l'empilement d'étiquettes du paquet MPLS, par une deuxième étiquette de transport (Nx) avec les informations d'adresse d'un deuxième routeur périphérique (X), qui suit le premier routeur périphérique (W) sur le chemin de transfert selon l'adressage du paquet MPLS, et le premier routeur périphérique (W) envoie ensuite le paquet MPLS au deuxième routeur périphérique (X).

6. Procédé selon la revendication précédente, dans lequel on envoie au premier routeur périphérique (W) sur le chemin de transfert du paquet MPLS la première étiquette de transport (Mx), qui contient les informations d'adresse du premier routeur périphérique (W), au moyen d'un système qui peut soit faire partie d'un réseau de base IP ou MPLS soit ne pas faire partie d'un réseau de base IP ou MPLS.

7. Procédé selon l'une quelconque des revendications précédentes, dans lequel le nombre de tous les routeurs périphériques (W, X, Y) jusqu'au routeur périphérique cible (X) sur le chemin de transfert du paquet MPLS est employé en utilisant une fonction de routeur de base des routeurs périphériques comme noeuds de commutation internes.

8. Procédé selon la revendication précédente, dans lequel on effectue la mémorisation d'informations d'adresse pour un nombre de routeurs périphériques (W, X, Y) depuis l'étiquette la plus haute avec l'information d'adresse du premier routeur périphérique à franchir (W) jusqu'à l'étiquette la plus basse avec l'information d'adresse du dernier routeur périphérique à franchir (Y) dans l'ordre des routeurs périphériques à traverser (W, X, Y) sur le chemin de transfert du paquet MPLS depuis l'émetteur jusqu'à la cible.

9. Procédé selon l'une quelconque des revendications précédentes, dans lequel, en plus de l'information d'adresse des noeuds de commutation MPLS et des routeurs périphériques (W, X, Y) à traverser sur le chemin de transfert du paquet MPLS depuis l'émetteur jusqu'à la cible, des informations d'une adresse cible, par exemple sous la forme d'une étiquette MPLS, d'une adresse IPv4, d'une adresse IPv6 ou d'une adresse Ethernet, sont en outre contenues dans l'empilement d'adresses ou l'empilement d'étiquettes du paquet MPLS.

10. Procédé selon la revendication précédente, dans lequel le dernier routeur périphérique (Y) sur le chemin de transfert du paquet MPLS conduit le paquet MPLS à sa cible à l'aide de l'adresse cible dans l'empilement d'adresses ou l'empilement d'étiquettes d'un paquet MPLS.

11. Procédé selon l'une quelconque des revendications précédentes, dans lequel la cible du paquet MPLS peut être une interface logique ou physique d'un routeur périphérique (W, X, Y), une adresse IPv4 accessible via une interface logique ou physique du routeur périphérique (W, X, Y) ou une terminaison interne du routeur périphérique (W, X, Y), comme par exemple un port ou une fonction OAM du routeur périphérique (W, X, Y);
et/ou
dans lequel il se produit dans un routeur périphérique (X) d'abord un enlèvement d'une étiquette (Px) hors de l'empilement d'étiquettes du paquet MPLS et ensuite un échange d'une étiquette (Cw) hors de l'empilement d'étiquettes du paquet MPLS, sans qu'il doive se produire, pour la retransmission du paquet, d'autres changements de l'empilement d'étiquettes;
et/ou
dans lequel il se produit, au dernier noeud de commutation interne sur le chemin de transfert avant un routeur périphérique (X), un enlèvement d'une étiquette (Ox) hors de l'empilement d'étiquettes du paquet MPLS et il se produit un échange d'une étiquette (Cw) hors de l'empilement d'étiquettes du paquet MPLS dans le routeur périphérique (X) suivant directement sur le chemin de transfert, et le paquet reste en outre dans le réseau de base.

12. Système de commande de paquets MPLS pour la transmission de paquets MPLS dans des réseaux sans connexion, dans lequel le paquet MPLS franchit sur un chemin de transfert entre un émetteur et une cible un nombre de noeuds de commutation MPLS internes ainsi qu'au moins deux routeurs périphériques MPLS (W, X, Y), qui représentent chaque fois une transition entre un réseau de base et un réseau de connexion, **caractérisé en ce que** le système de commande est conçu pour produire, pour un paquet MPLS à envoyer, un empilement d'adresses ou un empilement d'étiquettes, qui comprend des informations d'adresse relatives aux noeuds de commutation internes à franchir sur son chemin de transfert ainsi que des informations d'adresse pour lesdits au moins deux routeurs périphériques (W, X, Y) à franchir sur son chemin de transfert.

13. Système de commande selon la revendication précédente, dans lequel les routeurs périphériques (W, X, Y) sont conçus pour retransmettre respectivement au système de commande une information qui indique une valeur d'étiquette relative à un routeur périphérique cible accessible (X, Y, W), de telle manière que le routeur périphérique fournissant l'information retransmette un paquet reçu, qui comprend cette valeur d'étiquette cible, au routeur périphérique cible correspondant (X, Y, W).

14. Système de commande selon la revendication précédente, dans lequel le système de commande est raccordé à un routeur périphérique (W, X, Y), qui est construit de façon à recevoir des paquets MPLS sur l'interface avec le système de commande et à les retransmettre selon l'adressage des paquets MPLS;
et/ou
dans lequel le système de commande est construit de façon à exécuter les étapes de procédé définies dans les revendications de procédé 1 à 11, du fait que les fonctions correspondantes du système de commande sont utilisées par des paquets MPLS avec des empilements d'étiquettes MPLS générés par le système de commande.

15. Système de commande selon l'une quelconque des revendications 12 à 14, dans lequel le système de commande est construit de façon à
utiliser des chemins de transfert ou des boucles dans le réseau pour des paquets MPLS via un nombre de routeurs périphériques (W, X, Y), sans qu'un dispositif émettant les paquets MPLS (A) ou un dispositif recevant les paquets MPLS (Z) participe au routage de tous les noeuds de commutation MPLS, à l'exception des routeurs périphériques (W, X, Y) auxquels les dispositifs (A, Z) sont reliés;
et/ou
dans lequel les informations d'adresse dans l'empilement d'étiquettes de paquets MPLS à envoyer sont produites au moyen de fonctions MPLS et d'une fonction d'adresse du système de commande de paquets MPLS;
et/ou
dans lequel le système de commande est réalisé sous la forme d'un dispositif séparé ou d'une fonction interne d'un routeur périphérique (W, X, Y);
et/ou
dans lequel il est prévu un nombre de dispositifs de mesure, qui opèrent un contrôle de la continuité de chemins MPLS dans le réseau;
et/ou
dans lequel le réseau MPLS entier et les chemins de transfert des paquets MPLS ne sont surveillés qu'avec un seul dispositif de mesure.
